# EUROPÄISCHE PATENTSCHRIFT

(11) **EP 3 004 674 B1**
(45) Veröffentlichungstag und Bekanntmachung des Hinweises auf die Patenterteilung: **23.11.2016**
(21) Anmeldenummer: 14725625.9
(22) Anmeldetag: 25.04.2014
(51) Int. Cl.: F16C 39/02, F16C 23/08, F16C 32/04

(54) **LAGERANORDNUNG MIT EINEM FANGLAGER**
BEARING ARRANGEMENT WITH A BACK-UP BEARING
ENSEMBLE PALIER COMPORTANT UN PALIER DE RETENUE

(30) Priorität: 03.06.2013 DE 102013210218
(43) Veröffentlichungstag der Anmeldung: 13.04.2016
(73) Patentinhaber: Schaeffler Technologies AG & Co. KG, 91074 Herzogenaurach (DE)
(72) Erfinder: SIEBKE, Peter, 91074 Herzogenaurach (DE); RUHL, Stefan, 91056 Erlangen (DE)
(86) Internationale Anmeldenummer: PCT/DE2014/200184
(87) Internationale Veröffentlichungsnummer: WO 2014/194900

(56) Entgegenhaltungen:
- DE-A1-102006 028 200
- DE-A1-102011 005 761
- JP-A- 2011 001 972

## Beschreibung

### Gebiet der Erfindung

Die Erfindung betrifft eine ein Fanglager aufweisende Lageranordnung nach dem Oberbegriff des Anspruchs 1. Ein solches Fanglager ist dazu vorgesehen, bei Ausfall einer insbesondere als Magnetlagerung ausgebildeten Hauptlagerung in Funktion zu treten, wobei zur Minderung von Kraftspitzen ein das Fanglager aufnehmendes Gehäuse partiell elastisch nachgiebig gestaltet ist.

### Hintergrund der Erfindung

Eine gattungsgemäße Lageranordnung mit einem Fanglager ist aus der DE 10 2011 005 761 A1 bekannt. Das Fanglager stellt eine Sicherheitseinrichtung dar, die beim Ausfall einer Magnetlagerung das gefahrlose Auslaufen einer im bestimmungsgemäßen Betrieb magnetgelagerten Welle ermöglicht. Zu diesem Zweck weist ein das Fanglager aufnehmendes Gehäuse einen Schlitz auf, der sich im Wesentlichen in Umfangsrichtung eines Außenrings des Fanglagers erstreckt und als Durchbrechung ausgebildet ist. Der Schlitz erstreckt sich beispielsweise über einen Umfangswinkel von 50° bis 180° und hat eine Breite von weniger als 2 mm. Fällt ein zur Lagerung der Welle vorgesehenes Magnetlager aus, so wird die Welle durch das Fanglager aufgefangen, wobei die Wandungen des einen Federweg bereitstellenden Schlitzes auf Block gehen können.

Ein weiteres Fanglager für eine Magnetlagerung ist aus der DE 10 2010 035 183A1 bekannt. Ein Außenring dieses Fanglagers ist von einem Dämpfungsring umgeben, welcher auf seiner Mantelfläche regelmäßig angeordnete Ausnehmungen aufweist. Ein solches Fanglager ist beispielsweise für die Verwendung bei elektrischen Maschinen oder Turboladern vorgesehen.

Die DE 10 2010 032 111 A1 offenbart ein Fanglager für einen berührungslos gelagerten Rotor, bei welchem zwei Außenringteile axial elastisch gegeneinander verspannt sind. Beide Außenringteile kontaktieren einen Zentrierring, der die Aufgabe hat, die Außenringteile formschlüssig miteinander radial zu zentrieren, insbesondere wenn die Außenringteile durch eine auf das Fanglager einwirkende Radialkraft axial auseinander gedrückt werden.

Zur Dämpfung eines Lagerrings sind außer mechanischen Dämpfungselementen grundsätzlich auch hydraulische Dämpfungsvorrichtungen bekannt. Ein Beispiel hierfür ist in der Patentschrift DE 10 2006 026 123 B4 offenbart, welche ein Verfahren zum Dämpfen von Bewegungen eines Rotors radial zur Rotorachse betrifft. Ein um die Rotorachse herum verlaufender Ringspalt ist hierbei mit einem viskosen Medium gefüllt, welches in Abhängigkeit vom Betriebszustand des Rotors mit unterschiedlichen Drücken beaufschlagt wird.

JP 2011-1972 A offenbart die Merkmale des Oberbegriffs des Anspruchs 1.

### Aufgabe der Erfindung

Der Erfindung liegt die Aufgabe zu Grunde, eine Lageranordnung mit einem Fanglager anzugeben, welches besonders gut auf die bei Ausfall einer Hauptlagerung, insbesondere Magnetlagerung, aufzunehmenden Kräfte, welche Gewichts- und Beschleunigungskräfte einschließen, angepasst ist.

### Beschreibung der Erfindung

Diese Aufgabe wird erfindungsgemäß gelöst durch eine ein Fanglager umfassende Lageranordnung mit den Merkmalen des Anspruchs 1.

Die Lageranordnung weist ein bei Ausfall einer Hauptlagerung in Funktion tretendes Fanglager auf, welches mittels eines Gelenkes, das heißt zumindest geringfügig schwenkbar, in einer Umgebungskonstruktion, ohne Beschränkung der Allgemeinheit im Folgenden als Gehäuse bezeichnet, gehalten ist.

Gemäß einer ersten möglichen Bauform des Fanglagers (nicht beansprucht) weist dieses einen Außenring auf, der selbst ein Teil des Gelenkes darstellt. Eine solche Form eines Außenrings, jedoch nicht im Zusammenhang mit einem Fanglager, ist prinzipiell zum Beispiel aus der DE 10 2006 028 200 A1 sowie aus der DE 27 47 427 A1 bekannt.

Gemäß einer weiteren möglichen Bauform des Fanglagers ist das Gelenk komplett durch Bestandteile des Gehäuses gebildet. In diesem Fall wird zwischen einem den Außenring direkt umgebenden lagernahen Bereich des Gehäuses und einem diesen Bereich umgebenden lagerferneren Bereich des Gehäuses unterschieden, wobei der lagernahe Bereich zusammen mit dem Außenring des Fanglagers gegenüber dem lagerferneren Bereich schwenkbar ist.

Sowohl die Bauform, bei welcher eine Komponente des Gelenks unmittelbar durch den Außenring gebildet ist, als auch die letztgenannte Bauform, bei welcher das Gelenk ausschließlich durch das Gehäuse gebildet ist, ist derart gestaltbar, dass das Gelenk eine definierte Kippachse, auch als Vorzugskippachse bezeichnet, aufweist. Der Begriff Vorzugskippachse bedeutet, dass eine Schwenkbewegung um diese Achse gegenüber sonstigen Schwenkbewegungen erleichtert ist. Hierunter fallen auch Bauformen, bei welchen die Vorzugskippachse die einzig vorhandene Kippachse ist, während keinerlei Kippbewegungen um sonstige Achsen möglich sind. Die Vorzugskippachse ist in vorteilhafter Ausgestaltung orthogonal zur Rotationsachse des Fanglagers ausgerichtet. Sowohl bei horizontaler Rotationsachse als auch bei vertikaler Rotationsachse kann die Vorzugskippachse horizontal ausgerichtet sein.

Die Bauform mit im Gehäuse integriertem Gelenk weist vorzugsweise einen in Umfangsrichtung des Außenrings des Fanglagers verlaufenden, als Durchbrechung ausgebildeten Schlitz im Gehäuse auf, welcher mindestens eine nicht zylindrische Wandung aufweist. Durch diese Gestaltung ist sowohl eine Nachgiebigkeit des Außenrings in einer zur Rotationsachse des Fanglagers orthogonalen Richtung als auch eine zumindest geringfügige Kippbarkeit des Außenrings innerhalb des Gehäuses unter Krafteinwirkung, insbesondere unter gleichzeitiger Einwirkung von Radialkräften und Kippkräften, hergestellt. Das Fanglager ist vorzugsweise als Radiallager ausgebildet oder zumindest im Wesentlichen als Radiallager wirksam, wobei die radiale Steifigkeit, definiert als Kehrwert der radialen Nachgiebigkeit, winkelabhängig und hierbei vorzugsweise im geodätisch niedrigsten Bereich der Lageranordnung, also im durch Gewichtskräfte eines gelagerten Objektes am meisten belasteten Bereich, am geringsten ist.

In einer möglichen Ausführungsform ist das Fanglager sowohl zur Aufnahme von Radialkräften als auch zur Aufnahme von Axialkräften geeignet. Vorzugsweise handelt es sich bei dem Fanglager um ein Wälzlager, beispielsweise ein zweireihiges Schrägkugellager oder Kegelrollenlager. Ebenso sind auch Gleitlager oder kombinierte Wälz-Gleitlager als Fanglager innerhalb der Lageranordnung geeignet. Sofern das Fanglager als Wälzlager ausgebildet ist, sind dessen Wälzkörper, insbesondere Kugeln, vorzugsweise ohne Käfig zwischen den Lagerringen angeordnet.

Die Erfindung geht von der Überlegung aus, dass beim Auffangen einer Welle mittels eines Fanglagers eine signifikante Verlagerung und/oder Durchbiegung der Welle auftritt. Diese Verlagerung und/oder Durchbiegung hat zur Folge, dass das bevorzugt als Wälzlager ausgebildete Fanglager in einer Art belastet wird, welche nicht ideal auf die Lagerbauart abgestimmt ist. Beispielsweise sind Kippbelastungen möglich, für die das Fanglager nicht konzipiert ist. Sehr starke mechanische Belastungen bei Lastübernahme durch das Fanglager können insbesondere beim sogenannten Wirbeln auftreten. Unter einem Wirbeln wird hierbei ein Zustand mit umlaufendem lokalem Wellenschwerpunkt verstanden. Im Spezialfall des Rückwärtswirbeln laufen Lagerbauteile gegen die Rotationsrichtung der Welle in einem Umgebungsbauteil um.

Es hat sich gezeigt, dass im Rahmen der Erfindung mehrere gleichwertige Weiterentwicklungen der aus der DE 10 2011 005 761 A1 bekannten Lageranordnung die der Erfindung zu Grunde liegende Aufgabe lösen. Zum einen ist eine Ausführungsform realisierbar, bei welcher der Schlitz im Gehäuse mindestens eine nicht zylindrische Wandung aufweist.
Nach einer ersten Variante dieser Ausführungsform weist der in axialer Draufsicht bogenförmige Schlitz zwei zueinander parallele Wandungen auf. Gehen die Wandungen des Schlitzes beim Einfedern auf Block, so wird damit in gewünschter Weise eine Axialkraft auf das Fanglager erzeugt. Gerade bei ungleichförmigen Bewegungen der Welle, die zum Wirbeln tendieren, entstehen somit nicht regelmäßige axiale Krafteinwirkungen, die zur Unterdrückung jeglicher Resonanz innerhalb der Lageranordnung beitragen und damit das störungsfreie Auslaufen der Welle unterstützen. Die axialen Krafteinwirkungen auf den Außenring, welche in verschiedenen Umfangsbereichen des Fanglagers zu unterschiedlich ausgeprägten Verlagerungen in axialer Richtung führen, nämlich im Bereich des Schlitzes im Vergleich zu übrigen, steiferen Umfangsbereichen stärker ausgeprägt sind, bewirken in gewünschter Weise auch eine geringfügige Verkippung des Außenrings des Fanglagers um eine zu dessen Rotationsachse orthogonale Achse.

Nach einer zweiten Variante dieser Ausführungsform ist der Schlitz konisch ausgebildet. Hierdurch geht der Schlitz beim Einfedern lediglich auf einer seiner Stirnseiten auf Block, während auf der anderen Stirnseite ein Spalt zwischen den Wandungen des Schlitzes verbleibt. In diesem Zustand ist kein weiteres Einfedern, aber ein zumindest geringfügiges Verkippen der den Schlitz begrenzenden Wandungen zueinander möglich. Das gezielte Verkippen ist in vorteilhafter Gestaltung derart bemessen, dass eine durch Fallen der Welle aus der Magnetlagerung verursachte Wellendurchbiegung ausgeglichen wird. Der im Querschnitt konische Schlitz ist in bevorzugter Gestaltung auf dessen breiterer Stirnseite um mindestens 10% breiter als auf dessen schmalerer Stirnseite.

Weiterhin ist die der Erfindung zugrundeliegende Aufgabe dadurch lösbar, dass der Schlitz exzentrisch zu einer zur Rotationsachse des Fanglagers normalen Symmetrieebene des Außenrings angeordnet ist.

Durch diese Ausgestaltung wird, sobald sich beim Einfedern der Lageranordnung die Wandungen des Schlitzes berühren, das heißt auf Block gehen, ein Kippmoment zwischen einem inneren Abschnitt des Gehäuses, welcher dem Fanglager zugewandt ist, und einem äußeren Abschnitt des Gehäuses erzeugt. Grundsätzlich vergleichbar mit der konischen Gestaltung des Schlitzes ist die hieraus resultierende, typischerweise nur minimal ausgeprägte Verkippung des Außenrings des Fanglagers geeignet, eine Durchbiegung der gelagerten Welle zu kompensieren.

Unabhängig davon, ob der Schlitz im Gehäuse symmetrisch um die zur Rotationsachse des Fanglagers normale Symmetrieebene des Außenrings des Fanglagers oder - wie nach Anspruch 10 - außermittig angeordnet ist, kann sich der Schlitz auf seinen beiden Stirnseiten entweder über den identischen Winkelbereich oder über unterschiedliche Winkelbereiche erstrecken. Im letztgenannten Fall ist der Schlitz beispielsweise zu derjenigen Seite der Lageranordnung hin, auf welcher der größere Teil der von der Welle aufzunehmenden Gewichtskraft liegt, weiter geöffnet als auf der gegenüberliegenden Seite, welche einem zu lagernden, die Gewichtskraft hauptsächlich ausübenden Gegenstand abgewandt ist. Durch diese Gestaltung wird die zumindest minimale Verkippung des Fanglagers, wenn dieses die Funktion der als Hauptlagerung vorgesehenen Magnetlagerung übernimmt, unterstützt.

Der Schlitz im Gehäuse erstreckt sich beispielsweise über einen Winkel von 50° bis 180°, insbesondere 120°, und weist vorzugsweise eine geringste Breite von maximal 2 mm, zum Beispiel von 0,25 mm, auf. Die in axialer Richtung des Außenrings gemessene Erstreckung des Schlitzes beträgt bevorzugt weniger als die Hälfte der in derselben Richtung gemessenen Breite des Außenrings.

In Ausführungsformen, in welchen der Schlitz mittig um die Symmetrieebene des Außenrings angeordnet ist, können den Schlitz unmittelbar umgebende stirnseitige, zur Rotationsachse des Fanglagers normale Wandungen des Gehäuses gegenüber weiter vom Schlitz entfernten Stirnseiten des Gehäuses zur Symmetrieebene des Fanglagers hin versetzt sein. In anderen Ausführungsformen, insbesondere bei asymmetrischer Anordnung des Schlitzes gemäß Anspruch 10, kann dagegen das Gehäuse in seinem den Schlitz aufweisenden sowie den Außenring des Fanglagers aufnehmenden Bereich eine durchgehend ebene Stirnfläche aufweisen. In beiden Fällen kann der Kippeffekt beim Einfedern nicht nur dadurch hervorgerufen werden, dass den Schlitz begrenzende Wandungen auf Block gehen, sondern ohne Berührung solcher Wandungen bereits dadurch gegeben sein, dass aufgrund einer gegebenen Asymmetrie von Lager- und/oder Gehäusebauteilen sowohl eine Winkelabhängigkeit des Einfederverhaltens existiert, als auch eine längs der Rotationsachse variierende Nachgiebigkeit von Bauteilen gegeben ist. Insbesondere ist die letztgenannte Eigenschaft dadurch erreichbar, dass eine den Außenring unmittelbar abstützende Gehäusekomponente eine in Axialrichtung des Außenrings und damit des gesamten Fanglagers variierende Stärke - in radialer Richtung gemessen - aufweist.

In allen Ausführungsformen liegt ein Vorteil der Erfindung darin, dass durch eine Asymmetrie in der Gestaltung einer ein Fanglager aufweisenden Lageranordnung, insbesondere durch eine Asymmetrie eines eine elastische Nachgiebigkeit herstellenden Schlitzes innerhalb eines ein Fanglager aufnehmenden Gehäuses, gezielt Kräfte während des Auffangens einer Welle durch das Fanglager erzeugt werden, die auf das Fanglager wirkende Belastungsspitzen mindern, indem eine Verlagerung in Radialrichtung und gleichzeitige beschränkte Verkippung eines Außenrings des Fanglagers ermöglicht wird. Damit wird das kontrollierte Auslaufen der Welle bei Ausfall der Hauptlagerung unterstützt.

### Kurze Beschreibung der Zeichnungen

Nachfolgend werden mehrere Ausführungsbeispiele der Erfindung unter Bezugnahme auf die beigefügten Zeichnungen näher erläutert. Dabei zeigen, jeweils schematisiert:
- Figur 1: ausschnittsweise im Querschnitt ein erstes Ausführungsbeispiel einer Lageranordnung mit einem Fanglager,
- Figur 2: in einer Darstellung analog Figur 1 eine zweite Ausführungsform einer Lageranordnung mit einem Fanglager,
- Figur 3: eine Lageranordnung mit einem Fanglager in einer weiteren Schnittdarstellung,
- Figur 4: ausschnittsweise in einem Querschnitt entsprechend Figur 1 ein weiteres Ausführungsbeispiel einer Lageranordnung mit einem Fanglager,
- Figur 5: in einer Darstellung analog Figur 4 eine abgewandelte Ausführungsform einer Lageranordnung mit einem Fanglager,
- Figur 6: in einer weiteren Darstellung analog Figur 4 eine Lageranordnung mit einem Fanglager,
- Figur 7: in einer schematischen Darstellung die Form eines auf seinen beiden Stirnseiten unterschiedlich breiten Schlitzes einer Lageranordnung mit einem Fanglager.

### Ausführliche Beschreibung der Zeichnungen

Einander entsprechende oder prinzipiell gleichwirkende Teile sind in allen Figuren mit den gleichen Bezugszeichen gekennzeichnet.

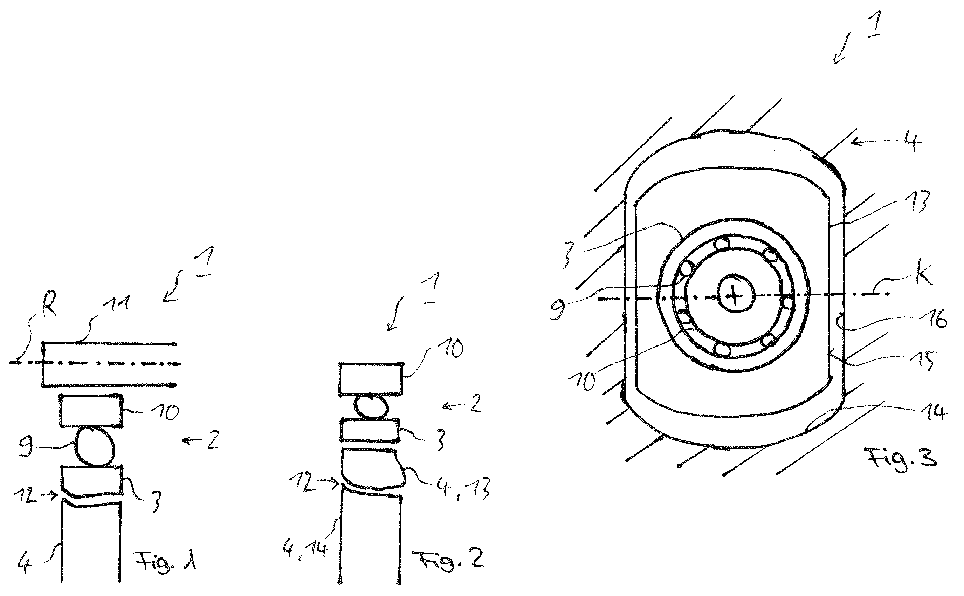

Eine insgesamt in dem Bezugszeichen 1 gekennzeichnete Lageranordnung umfasst ein Fanglager 2, von welchem in Figur 1 ein Außenring 3, ein Wälzkörper 9, nämlich eine Kugel, sowie ein Innenring 10 sichtbar ist. Die Kugeln 9 rollen ohne Käfig zwischen den Lagerringen 3,10 ab. Der Innenring 10 ist geringfügig von einer Welle 11 beabstandet, welche im bestimmungsgemäßen Betrieb der Lageranordnung 1 durch eine nicht dargestellte Hauptlagerung, insbesondere Magnetlagerung, gelagert ist. Das Fanglager 2 tritt nur bei Ausfall der Hauptlagerung in Funktion.

Der Außenumfang des Außenrings 3 weist eine sphärische Form auf, die mit einer konvexen Kontur eines den Außenring 3 aufnehmenden Gehäuses 4 korrespondiert. Damit ist zwischen dem Außenring 3 und dem Gehäuse 4 ein Gelenk 12 gebildet. Solange das Fanglager 2 nicht in Funktion ist, wird der Außenring 3 durch Reibungskräfte in der in Figur 1 gezeigten Position gehalten. Beim Ausfall der Hauptlagerung und Auffangen der Welle 11 durch das Fanglager 2 kann es zu Winkelfehlern innerhalb der Lageranordnung 1 kommen, welche durch das Gelenk 12 im Bereich bis zu mehreren Grad ausgleichbar sind.

Die Anordnung nach Figur 2 entspricht hinsichtlich ihrer Funktion prinzipiell der Anordnung nach Figur 1. Im Unterschied zur Lageranordnung nach Figur 1 ist jedoch bei der Lageranordnung nach Figur 2 ein Gelenk 12 nicht zwischen Fanglager 2 und Gehäuse 4, sondern komplett innerhalb des Gehäuses 4 gebildet. Das Gehäuse 4 weist hierbei zwei zueinander verschwenkbare Bereiche 13,14, nämlich einen lagernahen Bereich 13 und einen lagerferneren Bereich 14, auf. Der Außenring 3 ist im lagernahen Bereich 13 angeordnet, insbesondere in diesen Bereich 13 eingepresst. Der lagernahe Bereich 13 ist im Wesentlichen als Ring gestaltet, der am Außenumfang - entsprechend dem Außenring 3 nach Figur 1 - konvex ist. Der den ringförmigen lagernahen Bereich 13 aufnehmende lagerfernere Bereich 14 weist analog dem Gehäuse 4 nach Figur 1 eine konkave Innenoberfläche auf, die in Zusammenwirkung mit der konvexen Außenoberfläche des lagernahen Bereiches 13 das Gelenk 12 der Lageranordnung 1 bildet.

Die Figur 3 zeigt eine Weiterentwicklung der Lageranordnung 1 nach Figur 2. Bei dieser Weiterentwicklung weist das Gelenk 12 eine definierte Kippachse K auf, die orthogonal zur Rotationsachse R (vgl. Fig. 1) der Welle 11 angeordnet ist. Bei horizontaler Welle 11, wie in den Anordnungen nach den Figuren 1 bis 3 gegeben, ist die Kippachse K ebenfalls horizontal angeordnet. Die Kippachse K, allgemein auch als Vorzugskippachse bezeichnet, im bei der Lageranordnung 1 nach Figur 3 dadurch realisiert, dass der lagernahe Bereich 13 sowie der lagerfernere Bereich 14 des Gehäuses 4 jeweils zwei seitliche Abflachungen 15, 16 aufweist.

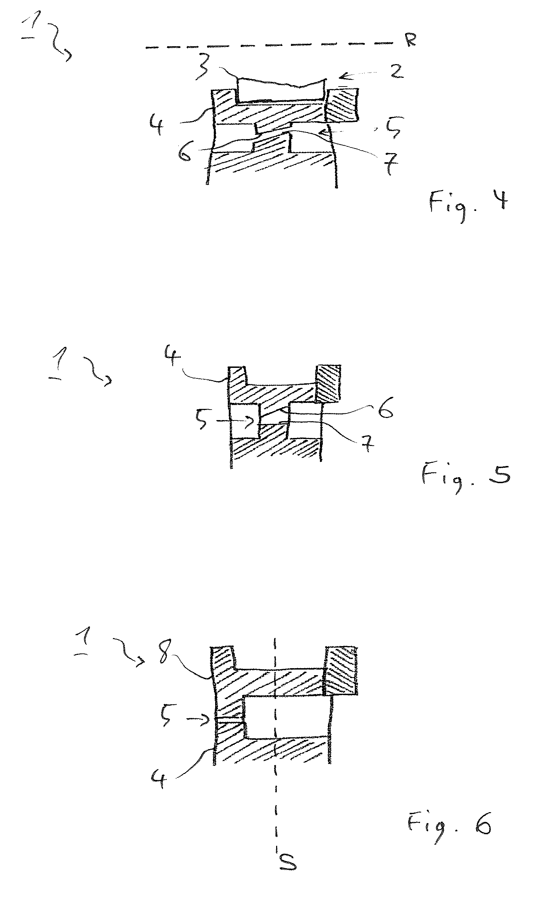

Im Ausführungsbeispiel nach Figur 4 ist der Außenring 3 in einem Gehäuse 4 aufgenommen, welches einen bogenförmigen, den Außenumfang des Außenrings 3 umgebenden Schlitz 5 aufweist. Hinsichtlich der prinzipiellen Funktion der Lageranordnung 1 wird auf den eingangs genannten Stand der Technik, insbesondere die Patentanmeldung DE 10 2011 005 761 A1, verwiesen. Der Schlitz 5 erstreckt sich über einen Winkel von 50° bis 180°, beispielsweise über einen Winkel von 120°, und weist eine Spaltbreite von weniger als 1 mm auf.

Wie aus der Schnittdarstellung nach Figur 4 hervorgeht, sind den Schlitz 5 begrenzende Wandungen 6, 7 nicht zylindrisch, sondern konisch ausgebildet. Hierbei sind im Ausführungsbeispiel nach Figur 4 beide Wandungen 6, 7 gleichermaßen gegenüber der mit R bezeichneten Rotationsachse des Fanglagers 2 schräg gestellt, sodass der Schlitz 5 eine konstante Breite aufweist.

Sobald das Fanglager 2 in Funktion tritt und eine ansonsten magnetgelagerte, nicht dargestellte Welle auffängt, federt das Gehäuse 4 im Bereich des Schlitzes 5 in gewünschter Weise ein, bis die Wandungen 6,7 auf Block gehen. In diesem Moment entsteht eine Axialkraft zwischen einem dem Außenring 3 zugewandten, in der Anordnung nach Figur 1 obenliegenden, und einem dem Außenring 3 sowie dem gesamten Fanglager 2 abgewandten, in der Anordnung nach Figur 1 unten liegenden Abschnitt des Gehäuses 4. Die Einfederung geht einher mit einer Verkippung des Fanglagers 2, welche der Wellenverkippung entspricht. Die Wandungen 6,7 bilden gehören einerseits zum lagernahen Bereich 13 und andererseits zum lagerferneren Bereich 14, zwischen welchen das Gelenk 12 gebildet ist.

Das Ausführungsbeispiel nach Figur 5 unterscheidet sich vom Ausführungsbeispiel nach Figur 4 dadurch, dass lediglich die innere, dem Fanglager 2 zugewandte Wandung 6 des Schlitzes 5 konisch ist, während die äußere Wandung 7 des Schlitzes 5 zylindrisch ist. Der Schlitz 5 weist dadurch im dargestellten Querschnitt insgesamt eine konische Form auf. Im Unterschied zum Ausführungsbeispiel nach Figur 4 können im Ausführungsbeispiel nach Figur 5 die Wandungen 6, 7 nicht vollständig, sondern lediglich auf einer Stirnseite des Schlitzes 5, in der Anordnung nach Figur 5 links, auf Block gehen. Hierdurch entsteht beim aneinander Stoßen der Wandungen 6, 7 ein Kippmoment, welches den dem Fanglager 2 zugewandten Abschnitt des Gehäuses 4 gegenüber dem äußeren, dem Fanglager 2 abgewandten Abschnitt des Gehäuses 4 zumindest minimal verkippt. In der Anordnung nach Figur 5 befindet sich eine nicht dargestellte Last, welche vom Fanglager 2 aufzunehmen ist, hauptsächlich rechts der Lageranordnung 1. Bei der Last handelt es sich beispielsweise um den Rotor einer elektrischen Maschine oder einer Turbine. Das Fallen der Last in das Fanglager 2 führt zu einer Wellendurchbiegung, welche durch die mit Hilfe der Querschnittkontur des Schlitzes 5 bewirkte minimale Verkippung des Fanglagers 2 teilweise oder vollständig kompensiert oder sogar leicht überkompensiert wird.

Eine gezielte Verkippung des Fanglagers 2, sobald dieses in Funktion tritt, ist auch beim Ausführungsbeispiel nach Figur 6 gegeben. Im Unterschied zu den Ausführungsbeispielen nach den Figuren 4 und 5 ist im Ausführungsbeispiel nach Figur 6 der Schlitz 5 nicht mittig zum Außenring 3, das heißt gleichmäßig um eine zur Rotationsachse R des Fanglagers 2 normale Symmetrieebene S des Außenrings 3, sondern derart außermittig angeordnet, dass eine vollkommen ebene Stirnfläche 8 des Gehäuses 4 in den Bereichen, in welchen der Schlitz 5 angeordnet und der Außenring 3 aufgenommen ist, gebildet ist.

Der gesamte Schlitz 5 befindet sich in der Anordnung nach Figur 6 außerhalb der genannten Symmetrieebene S des Fanglagers 2. Noch ausgeprägter als beim Ausführungsbeispiel nach Figur 5 führt ein belastungsbedingtes Schließen des Schlitzes 5 zu einem auf das Fanglager 2 wirkenden Kippmoment, welches eine Durchbiegung einer gelagerten Welle kompensiert.

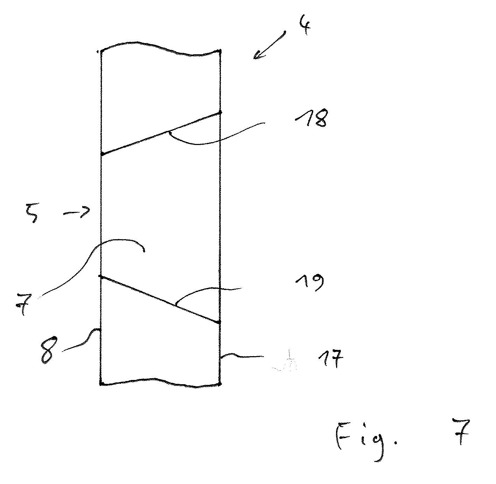

Die Figur 7 zeigt in einem schematischen Detail eine Weiterentwicklung der Anordnung nach Figur 6, welche in analoger Weise auch bei den Anordnungen nach den Figuren 4 und 5 realisierbar ist. Sichtbar ist hierbei der Schlitz 5 in einer Ansicht radial von innen nach außen auf den lagerferneren Bereich 14.

Der in Umfangsrichtung des Fanglagers 2 verlaufende Schlitz 5 ist somit in abgewickelter, zweidimensionaler Form dargestellt. In axialer Richtung des Fanglagers 2 erstreckt sich der Schlitz 5 von der Stirnfläche 8 bis zu einer zweiten Stirnfläche 17. In Umfangsrichtung wird der Schlitz 5 begrenzt durch zwei umfangsseitige Wandungen 18,19, deren Erstreckung in radialer Richtung des Fanglagers 2 der Spaltbreite des Schlitzes 5 entspricht. Wie aus Figur 7 hervorgeht, ist die Breite des Schlitzes 5 an der ersten Stirnfläche 8 geringer als an der zweiten Stirnfläche 17. Der Schlitz 5 weitet sich also in axialer Richtung auf. Damit wird erreicht, dass das Fanglager 2 an der zweiten Stirnfläche 17 im Vergleich zur ersten Stirnfläche 8 stärker einfedert.

### Bezugszahlenliste

- 1: Lageranordnung
- 2: Fanglager
- 3: Außenring
- 4: Gehäuse
- 5: Schlitz
- 6: Wandung
- 7: Wandung
- 8: Stirnfläche
- 9: Wälzkörper
- 10: Innenring
- 11: Welle
- 12: Gelenk
- 13: lagernaher Bereich
- 14: lagerfernerer Bereich
- 15: Abflachung des lagernahen Bereichs
- 16: Abflachung des lagerferneren Bereichs
- 17: Stirnfläche
- 18: Wandung
- 19: Wandung

- K: Kippachse
- R: Rotationsachse
- S: Symmetrieebene

## Patentansprüche

1. Lageranordnung mit einem Fanglager (2), welches als Sicherheitseinrichtung zusätzlich zu einer Hauptlagerung vorgesehen ist, wobei zwischen einem Außenring (3) des Fanglagers (2) und einem diesen umgebenden Gehäuse (4) ein Gelenk (12) ausgebildet ist, das Gelenk (12) zwischen einem den Außenring (3) direkt umgebenden lagernahen Bereich (13) des Gehäuses (4) und einem diesen Bereich (13) umgebenden lagerferneren Bereich (14) des Gehäuses (4) gebildet ist, wobei das Gelenk (12) eine zur Rotationsachse (R) des Fanglagers (2) orthogonale Kippachse (K) aufweist, **dadurch gekennzeichnet, dass** zwischen dem lagernahen Bereich (13) des Gehäuses (4) und dem lagerferneren Bereich (14) des Gehäuses (4) ein sich in Umfangsrichtung des Außenrings (3) erstreckender Schlitz (5) existiert, welcher mindestens eine nicht zylindrische Wandung (6,7) aufweist oder welcher exzentrisch zu einer zur Rotationsachse (R) des Fanglagers (2) normalen Symmetrieebene (S) des Außenrings (3) angeordnet ist.

2. Lageranordnung nach Anspruch 1, **dadurch gekennzeichnet, dass** der Schlitz (5), welcher mindestens eine nicht zylindrische Wandung (6,7) aufweist, zwei zueinander parallele Wandungen (6,7) aufweist.

3. Lageranordnung nach Anspruch 1, **dadurch gekennzeichnet, dass** der Schlitz (5), welcher mindestens eine nicht zylindrische Wandung (6,7) aufweist, konisch ausgebildet ist.

4. Lageranordnung nach Anspruch 3, **dadurch gekennzeichnet, dass** der Schlitz (5) auf dessen breiterer Stirnseite um mindestens 10% breiter als auf dessen schmalerer Stirnseite ist.

5. Lageranordnung nach Anspruch 3 oder 4, **dadurch gekennzeichnet, dass** der Schlitz (5) dazu ausgebildet ist, bei auf den Außenring (3) einwirkender Radiallast ausschließlich auf dessen schmalerer Stirnseite auf Block zu gehen.

6. Lageranordnung nach Anspruch 10, **dadurch gekennzeichnet, dass** der Schlitz (5), welcher exzentrisch zu einer zur Rotationsachse (R) des Fanglagers (2) normalen Symmetrieebene (S) des Außenrings (3) angeordnet ist, vollständig außerhalb der Symmetrieebene (S) angeordnet ist.

7. Lageranordnung nach einem der Ansprüche 1 bis 6, **dadurch gekennzeichnet, dass** sich der Schlitz (5) an seinen beiden Stirnseiten über unterschiedliche Winkelbereich erstreckt.

## Claims

1. Bearing arrangement with a back-up bearing (2) which is provided additionally to a main bearing as a safety device, wherein a joint (12) is formed between an outer ring (3) of the back-up bearing (2) and a housing (4) surrounding said outer ring, the joint (12) is formed between a region (13) of the housing (4) that directly surrounds the outer ring (3) and is close to the bearing and a region (14) of the housing (4) that surrounds said region (13) and is further away from the bearing, wherein the joint (12) has a tilting axis (K) which is orthogonal to the axis of rotation (R) of the back-up bearing (2), **characterized in that** between the region (13) of the housing (4) that is close to the bearing and the region (14) of the housing (4) that is further away from the bearing there is a slot (5) which extends in the circumferential direction of the outer ring (3) and which has at least one non-cylindrical wall (6, 7) or which is arranged eccentrically with respect to a plane of symmetry (S) of the outer ring (3), which plane of symmetry is normal with respect to the axis of rotation (R) of the back-up bearing (2).

2. Bearing arrangement according to Claim 1, **characterized in that** the slot (5) which has at least one non-cylindrical wall (6, 7) has two walls (6, 7) which are parallel to each other.

3. Bearing arrangement according to Claim 1, **characterized in that** the slot (5) which has at least one non-cylindrical wall (6, 7) is of conical design.

4. Bearing arrangement according to Claim 3, **characterized in that** the slot (5) is at least 10% wider on its wider end side than on its narrower end side.

5. Bearing arrangement according to Claim 3 or 4, **characterized in that** the slot (5) is designed to be blocked exclusively on its narrower end side in the event of a radial load acting on the outer ring (3).

6. Bearing arrangement according to Claim 10, **characterized in that** the slot (5) which is arranged eccentrically with respect to a plane of symmetry (S) of the outer ring (3), which plane of symmetry is normal with respect to the axis of rotation (R) of the back-up bearing (2), is arranged completely outside the plane of symmetry (S).

7. Bearing arrangement according to one of Claims 1 to 6, **characterized in that** the slot (5) extends over different angular regions on its two end sides.

## Revendications

1. Dispositif de palier avec un palier de retenue (2), lequel est prévu en tant que système de sécurité en supplément d'un logement principal, entre la bague extérieure (3) du palier de retenue (2) et une cage (4) entourant ce dernier étant conçue une articulation (12), l'articulation (12) étant formée entre une zone (13) de la cage (4) proche du palier entourant directement la bague extérieure (3) et une zone (14) de la cage (4) plus éloignée du palier, entourant ladite zone (13), l'articulation (12) comportant un axe de basculement (K) orthogonal par rapport à l'axe de rotation (R) du palier de retenue (2), **caractérisé en ce qu'**entre la zone (13) de la cage (4) proche du palier et la zone (14) de la cage (4) plus éloignée du palier, il existe une encoche (5) s'étendant dans la direction périphérique de la bague extérieure (3), laquelle comporte au moins une paroi (6, 7) non cylindrique ou laquelle est placée de manière excentrique par rapport à un plan de symétrie (S) de la bague extérieure (3) normal par rapport à l'axe de rotation (R) du palier de retenue (2).

2. Dispositif de palier selon la revendication 1, **caractérisé en ce que** l'encoche (5), laquelle comporte au moins une paroi (6, 7) non cylindrique comporte deux parois (6, 7) parallèles l'une par rapport à l'autre.

3. Dispositif de palier selon la revendication 1, **caractérisé en ce que** l'encoche (5), laquelle comporte au moins une paroi (6, 7) non cylindrique est conçue sous forme conique.

4. Dispositif de palier selon la revendication 3, **caractérisé en ce que** sur sa face frontale plus large, l'encoche (5) est plus large d'au moins 10 % que sur sa face frontale plus étroite.

5. Dispositif de palier selon la revendication 3 ou la revendication 4, **caractérisé en ce que** lorsqu'une charge radiale agit sur la bague extérieure (3), l'encoche (5) est conçue pour passer à l'état de bloc exclusivement sur sa face frontale plus étroite.

6. Dispositif de palier selon la revendication 10, **caractérisé en ce que** l'encoche (5), laquelle est placée de manière excentrique par rapport à un plan de symétrie (S) de la bague extérieure (3) normal par rapport à un axe de rotation (R) du palier de retenue (2) est placée entièrement à l'extérieur du plan de symétrie (S).

7. Dispositif de palier selon l'une quelconque des revendications 1 à 6, **caractérisé en ce que** sur ses deux faces frontales, l'encoche (5) s'étend sur des plages angulaires différentes.
